# FASCICULE DE BREVET EUROPEEN

(11) **EP 1 554 480 B1**
(45) Date de publication et mention de la délivrance du brevet: **15.04.2009**
(21) Numéro de dépôt: 03775461.1
(22) Date de dépôt: 02.10.2003
(51) Int. Cl.: F02D 41/40, F01N 3/08

(54) **SYSTEME D'AIDE A LA REGENERATION D'UN PIEGE A NOx A STOCKAGE/DESTOCKAGE, POUR MOTEUR DIESEL DE VEHICULE**
SYSTEM ZUR REGENERATION EINES NOX-SPEICHERKATALYSATORS FÜR EINEN DIESELMOTOR IN EINEM KRAFTFAHRZEUG
SYSTEM FOR ASSISTING REGENERATION OF A STORAGE/RELEASING NOX TRAP FOR VEHICLE DIESEL ENGINE

(30) Priorité: 23.10.2002 FR 0213255
(43) Date de publication de la demande: 20.07.2005
(73) Titulaire: Peugeot Citroën Automobiles SA, 78943 Vélizy-Villacoublay Cedex (FR)
(72) Inventeur: BEAUGE, Yvon, F-94150 Rungis (FR); CHAOUCHE, Ali, F-75018 Paris (FR); MEDIOUN, Djamal, F-92700 Colombes (FR); AMELOOT, Piet, SW3 3NX LONDRES (GB); GASCOIN, Mickael, F-92700 Colombes (FR)
(74) Mandataire: Ménès, Catherine
(86) Numéro de dépôt international: PCT/FR2003/002896
(87) Numéro de publication internationale: WO 2004/038204

(56) Documents cités:
- EP-A- 1 035 315
- US-A- 6 082 325
- US-B1- 6 412 276
- PATENT ABSTRACTS OF JAPAN vol. 2000, no. 04, 31 août 2000 (2000-08-31) & JP 2000 018074 A (TOYOTA MOTOR CORP), 18 janvier 2000 (2000-01-18)

## Description

La présente invention concerne un système de réduction des émissions polluantes liées au fonctionnement d'un moteur Diesel de véhicule automobile et se rapporte plus particulièrement à un système d'aide à la régénération d'un piège à Nox à stockage/déstockage, intégré dans une ligne d'échappement d'un tel moteur.

On sait que sur les moteurs Diesel à injection directe pour véhicule automobile, la réduction des émissions de NOx par catalyse DeNOx à stockage/déstockage est une solution technique envisagée pour répondre aux normes relatives à ce type de rejets et notamment aux normes EURO IV.

A cet effet, on envisage d'utiliser un piège à NOx composé par exemple de sulfate de baryum destiné à absorber les NOx pendant le fonctionnement standard du moteur.

Quand ce piège est saturé, on propose de déclencher une phase de déstockage transitoire en basculant momentanément le moteur de ce mode de fonctionnement standard à mélange pauvre à un mode de fonctionnement de régénération à mélange riche pour produire des réducteurs, comme par exemple HC et CO, ce qui permet de réduire les NOx qui sont alors désorbés du piège, comme dans un catalyseur traditionnel.

Cependant, ceci pose des problèmes de contrôle du fonctionnement du moteur sous mélange riche, de façon stable sur l'ensemble du champ de fonctionnement de celui-ci, sans impact sur l'agrément de conduite du véhicule et le bruit de combustion, etc....

Le but de l'invention est donc de résoudre ces problèmes.

A cet effet, l'invention a pour objet un système d'aide à la régénération d'un piège à NOx à stockage/déstockage, intégré dans une ligne d'échappement d'un moteur Diesel de véhicule automobile, caractérisé en ce qu'il comporte des moyens d'injection de carburant dans les cylindres du moteur sous la forme au moins d'injections pilote et principale et des moyens de commande de ces moyens d'injection pour basculer périodiquement le moteur d'un mode de fonctionnement standard à mélange pauvre à une injection pilote et une injection principale, de stockage des NOx dans le piège, à un mode de fonctionnement de régénération à mélange riche, à au moins deux injections pilotes ou principales selon la charge du moteur, de déstockage des NOx du piège et de régénération de celui-ci.

Suivant d'autres caractéristiques :
- les moyens de commande sont adaptés pour piloter les moyens d'injection selon ces modes de fonctionnement standard et de régénération à deux injections pilotes ou à deux injections principales pour des charges du moteur inférieures ou supérieures à une valeur de seuil prédéterminée, respectivement ;
- la valeur de seuil de charge prédéterminée est définie par une pression moyenne effective d'environ 3 bars ;
- le moteur étant associé à des moyens de recirculation des gaz d'échappement en entrée de celui-ci, les moyens de commande sont adaptés pour réguler le fonctionnement de ces moyens de recirculation lors d'un fonctionnement du moteur en mélange riche ;
- dans le mode de fonctionnement à deux injections pilotes, les deux injections pilotes sont déclenchées dans une plage entre environ 50° vilebrequin et 5° vilebrequin, avant le point mort haut du cylindre concerné et en ce que l'injection principale est déclenchée dans une plage sous-calée jusqu'à environ 35° vilebrequin après le point mort haut ;
- dans le mode de fonctionnement à deux injections principales, l'injection pilote est déclenchée par une plage entre environ 50° vilebrequin et 5° vilebrequin avant le point mort haut du cylindre concerné et en ce que les injections principales sont déclenchées dans une plage entre environ 20° vilebrequin avant le point mort haut et 120° vilebrequin après le point mort haut ;
- les moyens de commande sont adaptés pour piloter les moyens d'injection afin de faire fonctionner le moteur en mélange pauvre pendant environ 60 secondes et en mélange riche pendant environ 2 secondes ;
- le moteur est associé à des moyens d'admission de gaz dans celui-ci et les moyens de commande sont adaptés pour réduire la quantité de gaz admise dans le moteur lorsque celui-ci est dans son mode de régénération.

L'invention sera mieux comprise à la lecture de la description qui va suivre, donnée uniquement à titre d'exemple et faite en se référant aux dessins annexés, sur lesquels :
- les Figs.1 et 2 illustrent les phases de stockage et de déstockage de NOx dans un piège entrant dans la constitution d'un système selon l'invention ;
- les Figs.3 et 4 illustrent le fonctionnement de moyens d'injection de carburant mis en oeuvre dans un système d'aide selon l'invention ; et
- la Fig.5 représente un schéma synoptique illustrant la structure d'un système selon l'invention.

Comme cela a été indiqué précédemment, l'invention se rapporte à un système d'aide à la régénération d'un piège à NOx à stockage/déstockage intégré dans une ligne d'échappement d'un moteur Diesel de véhicule automobile.

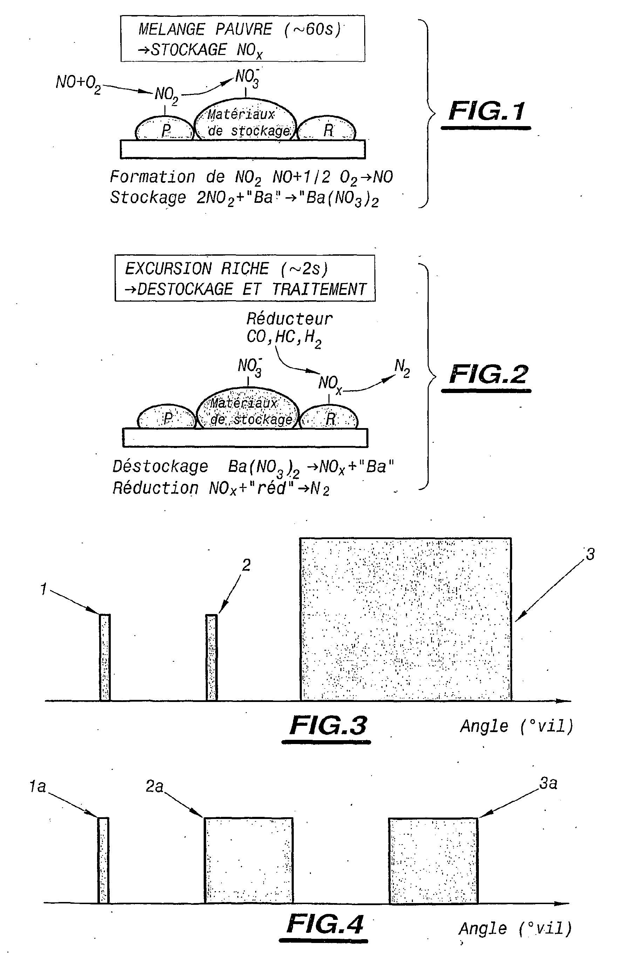

Ces phases de stockage et de déstockage sont illustrées sur les figures 1 et 2.

Comme cela a été indiqué également, le piège à NOx absorbe les NOx pendant le fonctionnement standard du moteur à mélange pauvre, tandis que dans un mode de fonctionnement de régénération à mélange riche, ces NOx sont déstockés et traités par production de réducteurs comme HC et CO, ce qui permet de réduire les NOx qui sont alors désorbés du piège comme dans un catalyseur traditionnel.

Cependant, et comme cela a été indiqué précédemment, se pose le problème de faire fonctionner un moteur Diesel à une telle richesse, de façon stable sur l'ensemble du champ moteur, sans impact sur l'agrément de conduite et le bruit de combustion entre autres.

L'opération de passage en mélange stoechiométrique ou riche est nécessaire pour purger le piège à NOx mais aussi pour le désulfater, car le soufre contenu dans le carburant provoque l'empoisonnement du piège.

Cette opération est plus longue que la purge, qui dure seulement quelques secondes, et s'avère donc encore plus difficile à gérer.

Dans ces conditions, l'aide à la régénération d'un tel piège à NOx à stockage/déstockage nécessite de développer une stratégie d'injections multiples spécifique sur tout le champ moteur, sur la base de plusieurs paramètres de réglage du moteur.

En effet, cette stratégie d'injection doit permettre de :
- fonctionner à richesse proche de 1 ;
- produire en quantité suffisante du CO, qui est le réducteur privilégié ;
- limiter le niveau de O2 ;
- limiter le niveau de HC ;
- respecter le niveau de fumée ;
- respecter la température des gaz d'échappement pour des raisons de tenue mécanique ; et enfin
- respecter les prestations fournies aux clients, à savoir l'agrément de conduite et le bruit de fonctionnement du moteur.

A cet effet, la présente invention propose d'améliorer les caractéristiques de la combustion en stabilité et en bruit, sur les différents points de charge du moteur, en appliquant une stratégie d'injection à deux injections pilotes ou à deux injections principales, comme cela est illustré sur les figures 3 et 4.

Par ailleurs, sur l'ensemble de ces points, la recirculation des gaz brûlés (EGR) est régulée pour respecter les critères de régénération du piège à NOx.

Sur les points à faible charge, comme par exemple pour une pression moyenne effective PME également connue dans l'état de la technique sous l'appellation anglaise « Brake mean effective pressure », inférieure à environ 3 bars, la stratégie à deux injections pilotes permet de répondre aux critères de régénération du piège à NOx, car elle permet de réduire significativement sur ces points les instabilités de combustion grâce au phasage des deux injections pilotes, de réduire le bruit grâce également à ce phasage des deux injections pilotes, de retarder l'injection principale et enfin de générer une cartographie moteur pour la régénération du piège à NOx basée sur une stratégie unique.

Comme cela a été indiqué précédemment, cette stratégie peut être appliquée sur les points à faibles charges de fonctionnement du moteur, le niveau d'EGR étant alors régulé.

Ceci est illustré sur la figure 3, où l'on reconnaît les deux injections pilotes désignées par les références 1 et 2 et l'injection principale désignée par la référence générale 3.

Ces deux injections pilotes peuvent être déclenchées dans une plage entre environ 50° vilebrequin et 5° vilebrequin avant le point mort haut du cylindre concerné, et l'injection principale peut être déclenchée dans une plage sous-calée jusqu'à environ 35° vilebrequin après le point mort haut.

Sur les points à charge plus élevée, comme par exemple pour une pression moyenne effective supérieure à environ 3 bars, la stratégie à deux injections principales est appliquée, ce qui permet outre de répondre aux critères déjà mentionnés précédemment, de maintenir la température des gaz d'échappement dans des limites admissibles par la structure du moteur (culasse, soupapes, collecteur,...).

Dans ce cas également, la recirculation des gaz brûlés EGR est régulée pour respecter les critères de régénération du piège à NOx.

Ceci est illustré sur la figure 4 où l'on reconnaît l'injection pilote 1a et les deux injections principales 2a et 3a.

L'injection pilote peut alors être déclenchée dans une plage entre environ 50° vilebrequin et 5° vilebrequin avant le point mort du cylindre concerné, et les injections principales peuvent être déclenchées dans une plage entre environ 20° vilebrequin avant le point mort haut et 120° vilebrequin après le mort haut.

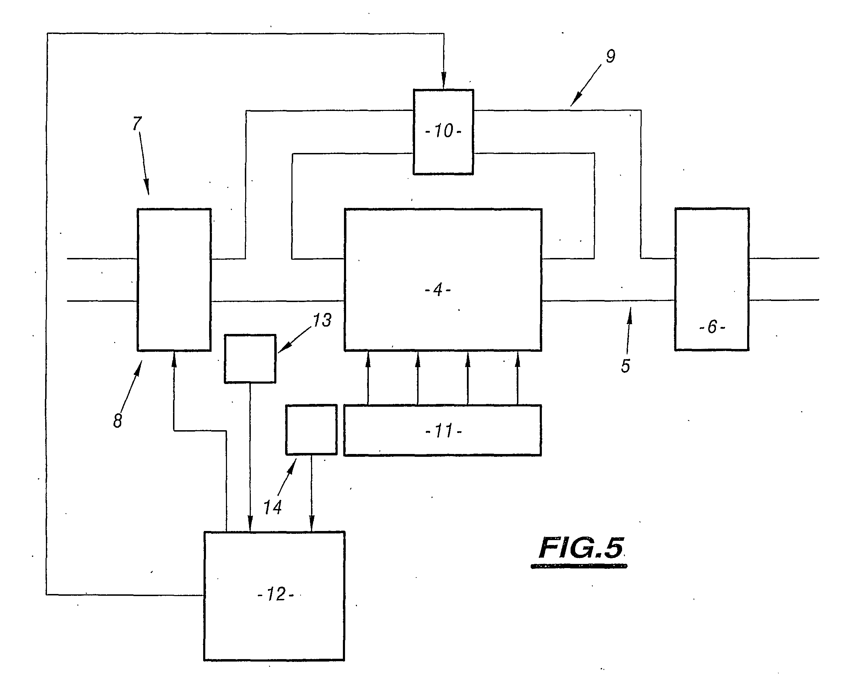

On reconnaît sur la figure 5, un moteur Diesel de véhicule automobile désigné par la référence générale 4, dont la sortie est raccordée à une ligne d'échappement 5 dans laquelle est intégré un piège à NOx 6.

Ce moteur est également associé à des moyens d'admission d'air désignés par la référence générale 7 comportant des moyens de réglage 8 de la quantité d'air admise.

Ce moteur peut également être associé à des moyens de recirculation de gaz d'échappement en entrée de celui-ci, désignés par la référence générale 9, associés à des moyens de contrôle de la circulation des gaz désignés par la référence générale 10.

Ces moyens de recirculation sont donc connectés entre la sortie et l'entrée du moteur pour assurer la recirculation des gaz d'échappement (EGR).

Les moyens de réglage 8 et de contrôle 10 peuvent comporter de façon classique, des vannes pilotables.

Par ailleurs, le moteur est également associé à des moyens 11 d'injection de carburant dans les cylindres de celui-ci, sous la forme d'injections pilote et principale, comme cela a été indiqué, présentant n'importe quelle structure appropriée.

Ces différents moyens, c'est-à-dire les moyens de recirculation de gaz, les moyens d'admission d'air et les moyens d'injection sont contrôlés par des moyens de commande désignés par la référence générale 12, comprenant tout calculateur approprié, recevant par exemple en entrée, des informations de régime de rotation du moteur et de pression des moyens d'injection, respectivement de moyens d'acquisition de données 13 et 14 correspondants, pour déterminer un fonctionnement à deux injections ou à deux injections principales selon la charge du moteur.

Les modes de fonctionnement standard à mélange pauvre de stockage des NOx dans le piège, et de fonctionnement de régénération à mélange riche, de déstockage des NOx du piège et donc de régénération de celui-ci, peuvent être commutés périodiquement, par les moyens de commande 12, le moteur 4 fonctionnant par exemple en mélange pauvre pendant environ 60 secondes, et en mélange riche pendant environ 2 secondes. Les moyens de commande 12 agissent alors sur les moyens d'admission d'air 7 dans le moteur 4 et les moyens d'injection 11 de carburant dans les cylindres de celui-ci, pour basculer périodiquement le moteur du mode de fonctionnement standard à mélange pauvre au mode de fonctionnement de régénération à mélange riche.

Ces moyens de commande 12 peuvent en effet être adaptés pour piloter les moyens d'admission de gaz afin de réduire la quantité de gaz admise dans le moteur lorsque celui-ci est dans son mode de fonctionnement de régénération et pour contrôler les moyens d'injection de la façon indiquée précédemment.

Ces moyens de commande peuvent également être adaptés pour réguler le fonctionnement des moyens de recirculation 9 des gaz d'échappement lors du fonctionnement du moteur à mélange riche.

Bien entendu, d'autres modes de réalisation peuvent être envisagés.

## Revendications

1. Système d'aide à la régénération d'un piège à NOx à stockage/déstockage, intégré dans une ligne d'échappement (5) d'un moteur Diesel (4) de véhicule automobile, **caractérisé en ce qu'**il comporte des moyens d'injection de carburant (11) dans les cylindres du moteur (4) sous la forme au moins d'injections pilote et principale et des moyens de commande (12) de ces moyens d'injection (11) pour basculer périodiquement le moteur (4) d'un mode de fonctionnement standard à mélange pauvre à une injection pilote et une injection principale, de stockage des NOx dans le piège (6), à un mode de fonctionnement de régénération à mélange riche, à au moins deux injections pilotes ou principales choisies selon la charge du moteur, de déstockage des NOx du piège (6) et de régénération de celui-ci.

2. Système selon la revendication 1, **caractérisé en ce que** les moyens de commande (12) sont adaptés pour piloter les moyens d'injection (11) selon ces modes de fonctionnement standard et de régénération à deux injections pilotes ou à deux injections principales pour des charges du moteur inférieures ou supérieures à une valeur de seuil prédéterminée, respectivement.

3. Système selon la revendication 2, **caractérisé en ce que** la valeur de seuil de charge prédéterminée est définie par une pression moyenne effective (PME) d'environ 3 bars.

4. Système selon l'une quelconque des revendications précédentes, **caractérisé en ce que** le moteur (4) étant associé à des moyens de recirculation des gaz d'échappement (9) en entrée de celui-ci, les moyens de commande (12) sont adaptés pour réguler le fonctionnement de ces moyens de recirculation (9) lors d'un fonctionnement du moteur en mélange riche.

5. Système selon l'une quelconque des revendications précédentes, **caractérisé en ce que**, dans le mode de fonctionnement à deux injections pilotes, les deux injections pilotes (1,2) sont déclenchées dans une plage entre environ 50° vilebrequin et 5° vilebrequin, avant le point mort haut du cylindre concerné et **en ce que** l'injection principale (3) est déclenchée dans une plage sous-calée jusqu'à environ 35° vilebrequin après le point mort haut.

6. Système selon l'une quelconque des revendications 2 à 4, **caractérisé en ce que**, dans le mode de fonctionnement à deux injections principales, l'injection pilote (1a) est déclenchée par une plage entre environ 50° vilebrequin et 5° vilebrequin avant le point mort haut du cylindre concerné et **en ce que** les injections principales (2a,3a) sont déclenchées dans une plage entre environ 20° vilebrequin avant le point mort haut et 120° vilebrequin après le point mort haut.

7. Système selon l'une quelconque des revendications précédentes, **caractérisé en ce que** les moyens de commande (12) sont adaptés pour piloter les moyens d'injection (11) afin de faire fonctionner le moteur en mélange pauvre pendant environ 60 secondes et en mélange riche pendant environ 2 secondes.

8. Système selon l'une quelconque des revendications précédentes, **caractérisé en ce que** le moteur est associé à des moyens d'admission de gaz dans celui-ci et **en ce que** les moyens de commande (12) sont adaptés pour réduire la quantité de gaz admise dans le moteur (4) lorsque celui-ci est dans son mode de régénération.

## Claims

1. System for assisting regeneration of a storage/release NOx trap integrated into an exhaust line (5) of a motor vehicle diesel engine (4), **characterized in that** it comprises means (11) for injecting fuel into the cylinders of the engine (4) at least in the form of pilot and main injections, and means (12 for controlling these injection means (11) in order to switch the engine (4) periodically from a standard operating mode using a mean mixture with one pilot injection and one main injection, in which NOx are stored in the trap (6), to a regeneration operation mode using a rich mixture, with at least two pilot or main injections selected according to the engine load, in which the NOx are released from the trap (6) and the trap is regenerated.

2. System according to Claim 1, **characterized in that** the control means (12) are designed to control the injection means (11) according to these standard and regeneration operating modes with two pilot injections or with two main injections for engine loads below or above a predetermined threshold value, respectively.

3. System according to Claim 2, **characterized in that** the predetermined load threshold value is defined by a mean effective pressure (MEP) of approximately 3 bar.

4. System according to any one of the preceding claims, **characterized in that**, with the engine (4) being associated with means (9) for recirculating exhaust gases to its input, the control means (12) are designed to regulate the operation of these recirculation means (9) when the engine is operating with a rich mixture.

5. System according to any one of the preceding claims, **characterized in that**, in the operating mode with two pilot injections, the two pilot injections (1, 2) are triggered in a range between approximately 50° crankshaft and 5° crankshaft before top dead centre of the cylinder in question, and **in that** the main injection (3) is triggered in an under-calibrated range up to approximately 35° crankshaft after top dead centre.

6. System according to any one of Claims 2 to 4, **characterized in that**, in the operating mode with two main injections, the pilot injection (1a) is triggered in a range between approximately 50° crankshaft and 5° before top dead centre of the cylinder in question, and **in that** the main injections (2a, 3a) are triggered in a range between approximately 20° crankshaft before top dead centre and 120° crankshaft after top dead centre.

7. System according to any one of the preceding claims, **characterized in that** the control means (12) are designed to control the injection means (11) in order to operate the engine with a lean mixture for approximately 60 seconds and with a rich mixture for approximately 2 seconds.

8. System according to any one of the preceding claims, **characterized in that** the engine is associated with means for admitting gas into the engine, and **in that** the control means (12) are designed to reduce the quantity of gas admitted into the engine (4) when the engine in its regeneration mode.

## Patentansprüche

1. System zur Unterstützung der Regeneration einer Speicher-/Abgabe-NOx-Falle, die in einer Abgasleitung (5) eines Dieselmotors (4) eines Kraftfahrzeugs integriert ist, **dadurch gekennzeichnet, dass** es Mittel (11) zur Einspritzung von Kraftstoff in die Zylinder des Motors (4) in Form von mindestens Voreinspritzungen und Haupteinspritzungen und Mittel (12) zur Steuerung dieser Einspritzmittel (11), um den Motor (4) periodisch aus einem Standardbetriebsmodus unter Verwendung eines mageren Gemisches mit einer Voreinspritzung und einer Haupteinspritzung, wobei NOx in der Falle (6) gespeichert wird, in einen Regenerationsbetriebsmodus unter Verwendung eines fetten Gemisches mit mindestens zwei Vor- oder Haupteinspritzungen in Abhängigkeit von der Motorlast, wobei NOx aus der Falle (6) abgegeben und die Falle regeneriert wird, umzuschalten.

2. System nach Anspruch 1, **dadurch gekennzeichnet, dass** die Steuermittel (12) zur Steuerung der Einspritzmittel (11) gemäß diesen Standard- und Regenerationsbetriebsmodi mit zwei Voreinspritzungen oder zwei Haupteinspritzungen für Motorlasten, die kleiner bzw. größer als ein vorbestimmter Schwellwert sind, ausgeführt sind.

3. System nach Anspruch 2, **dadurch gekennzeichnet, dass** der vorbestimmte Lastschwellwert durch einen mittleren Arbeitsdruck MAD von ungefähr 3 bar definiert wird.

4. System nach einem der vorhergehenden Ansprüche, **dadurch gekennzeichnet, dass** der Motor (4) Mitteln (9) zur Rückführung von Abgas zu seiner Einlassseite zugeordnet ist, wobei die Steuermittel (12) dazu ausgelegt sind, den Betrieb dieser Rückführmittel (9) bei Betrieb des Motors mit einem fetten Gemisch zu regeln.

5. System nach einem der vorhergehenden Ansprüche, **dadurch gekennzeichnet, dass** im Betriebsmodus mit zwei Voreinspritzungen die beiden Voreinspritzungen (1, 2) in einem Bereich zwischen ca. 50° Kurbelwelle und 5° Kurbelwelle vor dem oberen Totpunkt für den betreffenden Zylinder ausgelöst werden und dass die Haupteinspritzung (3) in einem unterkalibrierten Bereich bis ca. 35° Kurbelwelle hinter dem oberen Totpunkt ausgelöst wird.

6. System nach einem der Ansprüche 2 bis 4, **dadurch gekennzeichnet, dass** im Betriebsmodus mit zwei Voreinspritzungen, die Voreinspritzung (1a) durch einen Bereich zwischen 50° Kurbelwelle und 5° Kurbelwelle vor dem oberen Totpunkt des betreffenden Zylinders ausgelöst wird und dass die Haupteinspritzungen (2a, 3a) in einem Bereich zwischen ca. 20° Kurbelwelle vor dem oberen Totpunkt und 120° Kurbelwelle hinter dem oberen Totpunkt ausgelöst werden.

7. System nach einem der vorhergehenden Ansprüche, **dadurch gekennzeichnet, dass** die Steuermittel (12) dazu ausgelegt sind, die Einspritzmittel (11) zu steuern, um den Motor für ca. 60 Sekunden mit einem mageren Gemisch und für ca. 2 Sekunden mit einem fetten Gemisch zu betreiben.

8. System nach einem der vorhergehenden Ansprüche, **dadurch gekennzeichnet, dass** der Motor Gaseinlassmitteln darin zugeordnet ist und dass die Steuermittel (12) dazu ausgeführt sind, die in den Motor (4) eingelassene Gasmenge zu verringern, wenn er sich in seinem Regenerationsmodus befindet.
